# DEMANDE DE BREVET EUROPEEN

(11) **EP 4 671 133 A1**
(43) Date de publication de la demande: **31.12.2025**
(21) Numéro de dépôt: 25181588.2
(22) Date de dépôt: 09.06.2025
(51) Int. Cl.: B64D 37/00, B64F 5/40

(54) **AÉRONEF COMPORTANT UN RÉSERVOIR ÉQUIPÉ D'UN CAPTEUR DE NIVEAU RELIÉ À UN CONNECTEUR DÉPORTÉ ET DISPOSITIF DE CONTRÔLE D'UN NIVEAU DE LIQUIDE DANS UN TEL RÉSERVOIR**

(30) Priorité: 28.06.2024 FR 2407005
(71) Demandeur: AIRBUS OPERATIONS (S.A.S.), 31060 Toulouse (FR)
(72) Inventeur: DELMAS, Eric, 31060 TOULOUSE (FR); DEGUIN, Thomas, 31060 TOULOUSE (FR); GIROUD-GARAPON, Stéphane, 31060 TOULOUSE (FR); VERCELLIN, Roberto, 31060 TOULOUSE (FR)
(74) Mandataire: Fantin, Laurent

(57) **Abrégé**

L'invention a pour objet un aéronef comprenant au moins un réservoir (40), au moins un capteur de niveau (42) de type électrique positionné dans le réservoir (40) et configuré pour générer un signal de niveau (SN) en fonction d'un niveau de liquide dans le réservoir (40), au moins un premier connecteur (44) distant du réservoir (40) ainsi qu'au moins une liaison (46) configurée pour transmettre le signal de niveau (SN) généré par le capteur de niveau (42) et une énergie électrique pour alimenter le capteur de niveau (42), ladite liaison (46) reliant le premier connecteur (44) et le capteur de niveau (42).

Cette solution permet de contrôler le niveau de remplissage d'un réservoir (40) difficilement accessible.

L'invention a également pour objet un dispositif de contrôle (48) d'un niveau de liquide d'un tel réservoir en se connectant au premier connecteur (44).

## Description

La présente demande se rapporte à un aéronef comportant un réservoir équipé d'un capteur de niveau relié à un connecteur déporté ainsi qu'à un dispositif de contrôle d'un niveau de liquide dans un tel réservoir.

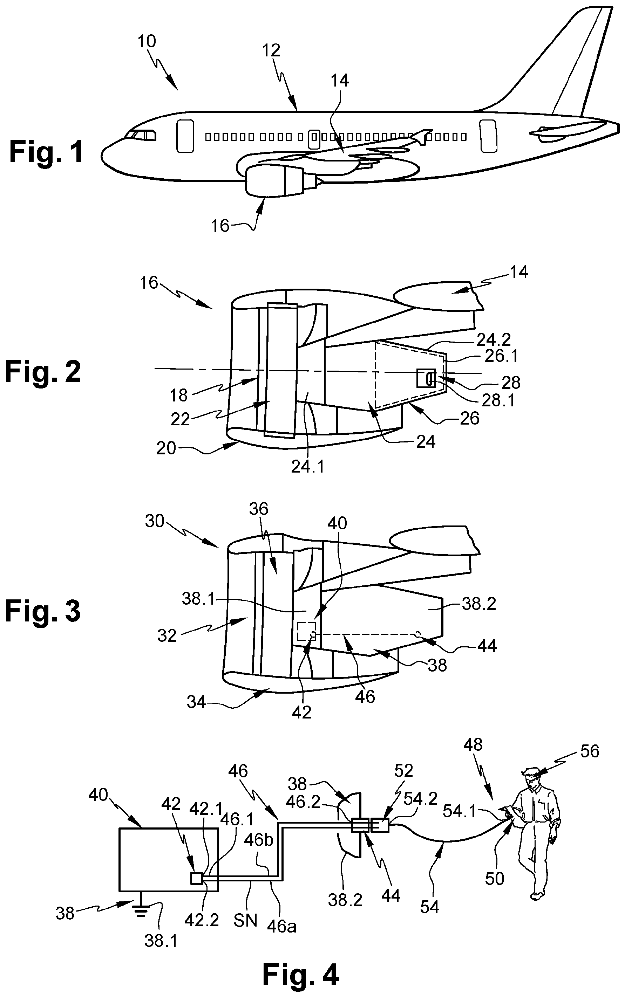

Selon un mode de réalisation visible sur la figure 1, un aéronef 10 comprend un fuselage 12, des ailes 14 positionnées de part et d'autre du fuselage 12 ainsi que des ensembles de propulsion 16 positionnés sous les ailes 14 et reliés à ces dernières.

Comme illustré sur la figure 2, un ensemble de propulsion 16 comprend un turboréacteur 18 ainsi qu'une nacelle 20 positionnée autour du turboréacteur 18. Le turboréacteur 18 comprend une soufflante 22 ainsi qu'un cœur de réacteur 24 qui comporte une partie avant 24.1 positionnée au droit de la soufflante 22 ainsi qu'une partie arrière 24.2 décalée vers l'arrière par rapport à la soufflante 22. La partie arrière 24.2 du cœur de réacteur 24 comprend une structure tubulaire 26 qui délimite avec la nacelle 20 un conduit annulaire dans lequel circule un flux d'air secondaire propulsé par la soufflante 22. Selon une configuration, la structure tubulaire 26 comprend un capot 26.1.

Selon un mode de réalisation, l'ensemble de propulsion 16 comprend un réservoir d'huile 28 positionné au niveau de la structure tubulaire 26, notamment au niveau du capot 26.1.

Le réservoir d'huile 28 comprend une paroi transparente 28.1 permettant de visualiser le niveau de liquide à l'intérieur du réservoir d'huile 28. Ainsi, un opérateur peut contrôler le niveau de liquide dans le réservoir d'huile 28 lorsque l'aéronef 10 est au sol et ses ensembles de propulsion sont à l'arrêt.

Ce mode de réalisation n'est pas pleinement satisfaisant car il impose que le réservoir d'huile 28 soit positionné dans une zone accessible pour que le niveau de l'huile puisse être contrôlé à travers la paroi transparente 28.1 par un opérateur.

La présente invention vise à remédier à tout ou partie des inconvénients de l'art antérieur. A cet effet, l'invention a pour objet un aéronef comprenant au moins un réservoir configuré pour stocker un liquide ainsi qu'au moins un capteur de niveau de type électrique, positionné dans le réservoir et configuré pour générer un signal de niveau en fonction d'un niveau de liquide dans le réservoir. En complément, l'aéronef comprend un turboréacteur qui comporte une soufflante ainsi qu'un cœur de réacteur, ce dernier comprenant une partie avant positionnée au droit de la soufflante ainsi qu'une partie arrière décalée vers l'arrière par rapport à la soufflante.

Selon l'invention, l'aéronef comprend au moins un premier connecteur distant du réservoir ainsi qu'au moins une liaison configurée pour transmettre le signal de niveau généré par le capteur de niveau et une énergie électrique pour alimenter le capteur de niveau, ladite liaison reliant le premier connecteur et le capteur de niveau. En complément, le réservoir est positionné au niveau de la partie avant du cœur de réacteur et le premier connecteur est situé au niveau de la partie arrière du cœur de réacteur, de manière à être aisément accessible depuis le sol.

Cette solution permet à un opérateur de contrôler le niveau de liquide dans un réservoir même si ce dernier n'est pas accessible ou difficilement accessible. Le capteur de niveau étant indépendant de l'alimentation électrique de l'aéronef, le contrôle peut s'effectuer même lorsque les ensembles de propulsion de l'aéronef sont à l'arrêt.

Selon une autre caractéristique, la liaison comprend un faisceau de câbles dont au moins un premier câble configuré pour transmettre le signal de niveau et au moins un deuxième câble configuré pour transmettre l'énergie électrique afin d'alimenter le capteur de niveau.

Selon une autre caractéristique, l'énergie électrique étant véhiculée sous la forme d'un courant électrique, la liaison comprend au moins deux câbles électriques pour former un circuit en boucle reliant le capteur de niveau et le premier connecteur.

L'invention a également pour objet un dispositif de contrôle d'un niveau de liquide dans un réservoir d'un aéronef selon l'une des caractéristiques précédentes. Ce dispositif de contrôle comprend au moins un appareil de visualisation configuré pour afficher au moins une information relative à un niveau de liquide en fonction d'un signal de niveau reçu, au moins un deuxième connecteur configuré pour se connecter au premier connecteur ainsi qu'au moins un cordon, reliant l'appareil de visualisation et le deuxième connecteur, configuré pour transmettre un signal de niveau et une énergie électrique.

Selon une autre caractéristique, l'appareil de visualisation est autonome en énergie électrique et comprend un système de stockage en énergie électrique configuré pour alimenter l'appareil de visualisation ainsi qu'un autre appareil.

Selon une autre caractéristique, l'appareil de visualisation est un appareil, choisi parmi une tablette, un ordinateur portable ou des lunettes de réalité augmentée, qui comprend un logiciel ou une application permettant de traiter un signal de niveau afin d'afficher une information relative à un niveau de remplissage d'un réservoir.

Selon une autre caractéristique, le cordon comprend un faisceau de câbles dont au moins un premier câble configuré pour transmettre un signal de niveau et au moins un deuxième câble configuré pour transmettre une énergie électrique.

Selon une autre caractéristique, l'énergie électrique est véhiculée sous la forme d'un courant électrique et en ce que le cordon comprend au moins deux câbles électriques pour former un circuit en boucle reliant l'appareil de visualisation et le deuxième connecteur.

D'autres caractéristiques et avantages ressortiront de la description de l'invention qui va suivre, description donnée à titre d'exemple uniquement, en regard des dessins annexés parmi lesquels :
- La figure 1 est une vue latérale d'un aéronef,
- La figure 2 est une coupe longitudinale d'un ensemble de propulsion illustrant un mode de réalisation de l'art antérieur,
- La figure 3 est une coupe longitudinale d'un ensemble de propulsion illustrant un mode de réalisation de l'invention,
- La figure 4 est une représentation schématique d'un réservoir équipé d'un capteur de niveau relié à un connecteur déporté illustrant un mode de réalisation de l'invention.

Selon un mode de réalisation visible sur la figure 3, un aéronef comprend au moins un ensemble de propulsion 30 d'aéronef qui comporte un turboréacteur 32 ainsi qu'une nacelle 34 positionnée autour du turboréacteur 32. Le turboréacteur 32 comprend une soufflante 36 ainsi qu'un cœur de réacteur 38 qui comporte une partie avant 38.1 positionnée au droit de la soufflante 36 ainsi qu'une partie arrière 38.2 décalée vers l'arrière par rapport à la soufflante 36.

Selon un mode de réalisation, l'ensemble de propulsion 30 comprend un réservoir 40 configuré pour stocker un liquide. Selon une application, le réservoir 40 est un réservoir d'huile. Bien entendu, le réservoir 40 n'est pas nécessairement positionné au niveau d'un ensemble de propulsion 30. Il peut être positionné dans toute zone plus ou moins accessible d'un aéronef.

Selon une configuration, le réservoir 40 est positionné au niveau de la partie avant 38.1 du cœur de réacteur 38, notamment dans une zone difficilement accessible.

Selon un mode de réalisation visible sur la figure 4, l'ensemble propulsion 30 (plus largement l'aéronef) comprend au moins un capteur de niveau 42 positionné dans le réservoir 40 et configuré pour indiquer le niveau de liquide dans le réservoir 40. Ce capteur de niveau 42 est de type électrique et configuré pour générer un signal de niveau SN en fonction du niveau de liquide dans le réservoir 40. A titre d'exemple, le capteur de niveau 42 est un capteur de niveau capacitif, un capteur de niveau résistif, un capteur de niveau à ultrason, un capteur de niveau optique ou autres.

Selon un mode de réalisation, le capteur de niveau 42 comprend au moins une entrée 42.1 pour relier le capteur de niveau 42 à une alimentation électrique ainsi qu'au moins une sortie 42.2 via laquelle est émis un signal de niveau SN en fonction du niveau de liquide dans le réservoir 40.

Selon l'invention, l'ensemble de propulsion 30 (plus largement l'aéronef) comprend au moins un premier connecteur 44 déporté, distant du réservoir 40, ainsi qu'au moins une liaison 46 reliant le premier connecteur 44 et le capteur de niveau 42, ladite liaison étant configurée pour transmettre, entre ses extrémités 46.1, 46.2 reliées respectivement au capteur de niveau 42 et au premier connecteur 44, le signal de niveau SN généré par le capteur de niveau 42 et une énergie électrique pour alimenter le capteur de niveau 42.

Selon un mode de réalisation, la liaison 46 comprend un faisceau de câbles dont au moins un premier câble 46a configuré pour transmettre un signal de niveau SN et au moins un deuxième câble 46b configuré pour transmettre une énergie électrique afin d'alimenter le capteur de niveau 42. Selon une configuration, l'énergie électrique est véhiculée sous la forme d'un courant électrique et la liaison 46 comprend au moins deux câbles électriques pour former un circuit en boucle reliant le capteur de niveau 42 et le premier connecteur 44.

Bien entendu, l'invention n'est pas limitée à cette configuration pour la liaison 46. Ainsi, cette dernière pourrait ne comprendre qu'un unique câble configuré pour transmettre un signal de niveau SN et une énergie électrique.

Selon un agencement, le premier connecteur 44 est positionné au niveau de la partie arrière 38.2 du cœur de réacteur 38. Cette position facilite l'accès au premier connecteur 44. Bien entendu, l'invention n'est pas limitée à cette position. Ainsi, le premier connecteur 44 peut être positionné au niveau de toute zone de l'aéronef aisément accessible depuis le sol.

Ce premier connecteur 44 est configuré pour être relié à une alimentation électrique et à un appareil de visualisation du signal de niveau SN.

Selon un mode de réalisation, un dispositif de contrôle 48 du niveau de liquide dans le réservoir 40 comprend au moins un appareil de visualisation 50 configuré pour afficher au moins une information relative à un niveau de liquide en fonction d'un signal de niveau SN reçu, au moins un deuxième connecteur 52 configuré pour se connecter au premier connecteur 44 ainsi qu'au moins un cordon 54, reliant l'appareil de visualisation 50 et le deuxième connecteur 52, configuré pour transmettre un signal de niveau SN et une énergie électrique entre ses extrémités 54.1, 54.2 reliées respectivement à l'appareil de visualisation 50 et au deuxième connecteur 52.

L'appareil de visualisation 50 peut être une tablette, un ordinateur portable, des lunettes de réalité augmentée ou autres. Cet appareil de visualisation 50 comprend un logiciel ou une application permettant de traiter un signal de niveau SN afin d'afficher une information relative au niveau de remplissage du réservoir 40.

Selon une particularité, l'appareil de visualisation 50 est autonome en énergie électrique et comprend un système de stockage en énergie électrique configuré pour alimenter l'appareil de visualisation 50 et éventuellement un autre appareil, comme le capteur de niveau 42. Selon un mode de réalisation, le cordon 54 comprend un faisceau de câbles dont au moins un premier câble configuré pour transmettre un signal de niveau SN et au moins un deuxième câble configuré pour transmettre une énergie électrique. Selon une configuration, l'énergie électrique est véhiculée sous la forme d'un courant électrique et le cordon 54 comprend au moins deux câbles électriques pour former un circuit en boucle reliant le système de stockage en énergie électrique de l'appareil de visualisation 50 et le deuxième connecteur 52.

Bien entendu, l'invention n'est pas limitée à cette configuration pour le cordon 54. Ainsi, ce dernier pourrait ne comprendre qu'un unique câble configuré pour transmettre un signal de niveau SN et une énergie électrique.

Les premier et deuxième connecteurs 44, 52 sont configurés pour coopérer entre eux et occuper un état branché dans lequel les premier et deuxième connecteurs 44, 52 assurent un transfert d'un signal de niveau SN et une énergie électrique entre eux ainsi qu'un état débranché dans lequel les premier et deuxième connecteurs 44, 52 sont distants.

Le principe de fonctionnement du dispositif de contrôle 48 du niveau de liquide d'un réservoir 40 est le suivant :
Un opérateur 56 branche le deuxième connecteur 52 au premier connecteur 44. Dès lors, le capteur de niveau 42 est alimenté par l'appareil de visualisation 50 en énergie électrique. Alimenté en énergie électrique, le capteur de niveau 42 peut déterminer le niveau du liquide dans le réservoir 40 et émettre un signal de niveau SN en fonction de ce niveau de liquide. Ce signal de niveau SN est transmis via la liaison 46, les premier et deuxième connecteurs 44, 52 ainsi que le cordon 54 à l'appareil de visualisation 50 qui affiche alors une information relative au niveau de liquide dans le réservoir 40 en fonction du signal de niveau reçu.

Cette solution permet à un opérateur de contrôler aisément et de manière simple le niveau de liquide dans un réservoir 40 même si ce dernier n'est pas accessible ou difficilement accessible. Le capteur de niveau 42 étant indépendant de l'alimentation électrique de l'aéronef, le contrôle peut s'effectuer même lorsque les ensembles de propulsion 30 de l'aéronef sont à l'arrêt.

## Revendications

1. Aéronef comprenant au moins un réservoir (40) configuré pour stocker un liquide ainsi qu'au moins un capteur de niveau (42) de type électrique positionné dans le réservoir (40) et configuré pour générer un signal de niveau (SN) en fonction d'un niveau de liquide dans le réservoir (40), l'aéronef comprenant un turboréacteur (32) qui comporte une soufflante (36) ainsi qu'un cœur de réacteur (38), ce dernier comprenant une partie avant (38.1) positionnée au droit de la soufflante (36) ainsi qu'une partie arrière (38.2) décalée vers l'arrière par rapport à la soufflante (36) ; **caractérisé en ce que** l'aéronef comprend au moins un premier connecteur (44) distant du réservoir (40) ainsi qu'au moins une liaison (46) configurée pour transmettre le signal de niveau (SN) généré par le capteur de niveau (42) et une énergie électrique pour alimenter le capteur de niveau (42), ladite liaison (46) reliant le premier connecteur (44) et le capteur de niveau (42), **en ce que** le réservoir (40) est positionné au niveau de la partie avant (38.1) du cœur de réacteur (38) et **en ce que** le premier connecteur (44) est situé au niveau de la partie arrière (38.2) du cœur de réacteur (38), de manière à être aisément accessible depuis le sol.

2. Aéronef selon la revendication précédente, **caractérisé en ce que** la liaison (46) comprend un faisceau de câbles dont au moins un premier câble (46a) configuré pour transmettre le signal de niveau (SN) et au moins un deuxième câble (46b) configuré pour transmettre l'énergie électrique afin d'alimenter le capteur de niveau (42).

3. Aéronef selon la revendication précédente, **caractérisée en ce que** l'énergie électrique est véhiculée sous la forme d'un courant électrique et **en ce que** la liaison (46) comprend au moins deux câbles électriques pour former un circuit en boucle reliant le capteur de niveau (42) et le premier connecteur (44).

4. Dispositif de contrôle (48) d'un niveau de liquide dans un réservoir (40) d'un aéronef selon l'une des revendications précédentes, **caractérisé en ce que** le dispositif de contrôle (48) comprend au moins un appareil de visualisation (50) configuré pour afficher au moins une information relative à un niveau de liquide en fonction d'un signal de niveau (SN) reçu, au moins un deuxième connecteur (52) configuré pour se connecter au premier connecteur (44) ainsi qu'au moins un cordon (54), reliant l'appareil de visualisation (50) et le deuxième connecteur (52), configuré pour transmettre un signal de niveau (SN) et une énergie électrique.

5. Dispositif de contrôle (48) selon la revendication précédente, **caractérisé en ce que** l'appareil de visualisation (50) est autonome en énergie électrique et comprend un système de stockage en énergie électrique configuré pour alimenter l'appareil de visualisation (50) et un autre appareil.

6. Dispositif de contrôle (48) selon l'une des revendications 4 à 5, **caractérisé en ce que** l'appareil de visualisation (50) est un appareil, choisi parmi une tablette, un ordinateur portable ou des lunettes de réalité augmentée, qui comprend un logiciel ou une application permettant de traiter un signal de niveau (SN) afin d'afficher une information relative à un niveau de remplissage d'un réservoir (40).

7. Dispositif de contrôle (48) selon l'une des revendications 4 à 6, **caractérisé en ce que** le cordon (54) comprend un faisceau de câbles dont au moins un premier câble configuré pour transmettre un signal de niveau (SN) et au moins un deuxième câble configuré pour transmettre une énergie électrique.

8. Dispositif de contrôle (48) selon la revendication précédente, **caractérisé en ce que** l'énergie électrique est véhiculée sous la forme d'un courant électrique et **en ce que** le cordon (54) comprend au moins deux câbles électriques pour former un circuit en boucle reliant l'appareil de visualisation (50) et le deuxième connecteur (52).
